# EUROPÄISCHE PATENTSCHRIFT

(11) **EP 1 085 285 B1**
(45) Veröffentlichungstag und Bekanntmachung des Hinweises auf die Patenterteilung: **24.11.2004**
(21) Anmeldenummer: 00119950.4
(22) Anmeldetag: 14.09.2000
(51) Int. Cl.: F28D 9/00, F28D 9/02, C13G 1/00

(54) **Plattenwärmetauscher und Verdampfer**
Plate-like heat exchanger and evaporator
Echangeur de chaleur à plaques et évaporateur

(30) Priorität: 16.09.1999 DE 19944426
(43) Veröffentlichungstag der Anmeldung: 21.03.2001
(73) Patentinhaber: GEA ECOFLEX GmbH, 31157 Sarstedt (DE)
(72) Erfinder: Daschmann, Horst, 40882 Ratingen (DE); Niepoth, Klaus, 47495 Rheinberg (DE)
(74) Vertreter: Stenger, Watzke & Ring Patentanwälte

(56) Entgegenhaltungen:
- EP-A- 0 265 528
- EP-A- 0 853 224
- WO-A-95/23015
- DE-A- 1 501 653
- DE-A- 4 343 399
- DE-C- 147 656
- GB-A- 356 687
- US-A- 3 916 644
- US-A- 5 441 105

## Beschreibung

Die Erfindung betrifft einen Plattenwärmetauscher mit im Kreuzstrom durchströmbaren Strömungskanälen, wobei die Strömungskanäle für das eine Medium wellenförmig und für das andere Medium rohrförmig ausgebildet sind, wobei die rohrförmigen Strömungskanäle einerseits zwischen jeweils zu einem Plattenpaar verbunden, mit mehreren parallelen Reihen rinnernförmiger Prägeabschnitte versehenen Einzelplatten und andererseits zwischen den zu einem Plattenstapel zusammengefügten Plattenpaaren ausgebildet sind, wobei die Prägeabschnitte benachbarter Reihen in Längsrichtung zueinander versetzt angeordnet sind. Weiterhin betrifft die Erfindung einen Verdampfer, insbesondere für mit auskristallisierbaren Stoffen beladenen Medien, wie z. B. bei der Verwendung in der Zuckerindustrie, mit einem Verdampfergehäuse und mindestens einem in dem Verdampfergehäuse angeordneten Plattenwärmetauscher der vorstehenden Art.

Ein gattungsgemäßer Plattenwärmetauscher ist beispielsweise aus der DE 43 43 399 C2 bekannt. Bei diesem bekannten Wärmetauscher, der sich in der Praxis durchaus bewährt hat, verlaufen die wellenförmigen Strömungskanäle zwischen den zu Plattenpaaren zusammengefügten Einzelplatten und die rohrförmigen Strömungskanäle zwischen den zu einem Plattenstapel zusammengefügten Plattenpaaren, wobei die rohrförmigen Strömungskanäle senkrecht verlaufen, um einen möglichst hohen Durchsatz zu ermöglichen. Da die Breite der Stahlblechbahnen, aus denen die Einzelplatten geprägt werden, fertigungstechnisch begrenzt ist, ist es zur Verwendung in einem Verdampfer notwendig, mehrere Plattenwärmetauscherstapel übereinander in dem Verdampfergehäuse anzuordnen. Das diese Plattenwärmetauscherstapel von oben nach unten entlang der rohrförmigen Strömungskanäle durchströmende Medium wird aufgrund des Aufbaus aus mehreren über- bzw. untereinander angeordneten Plattenstapeln beim Übergang von einem Plattenstapel zum anderen Plattenstapel immer wieder aufgestaut, wodurch sich der Durchsatz und somit auch die spezifische Leistung des Verdampfers verschlechtert. Insbesondere bei der Verwendung von mit auskristallisierbaren Stoffen beladenen Medien besteht bei dieser Art der Plattenwärmetauscher die Gefahr, daß diese sich entlang der rohrförmigen Strömungskanäle aufgrund des zwischenzeitlichen Aufstauens absetzen. Durch die Unterbrechung der rohrförmigen Strömungskanäle beim Übergang von einem Plattenstapel zum anderen Plattenstapel ist darüber hinaus insbesondere eine mechanische Reinigung der rohrförmigen Strömungskanäle so gut wie ausgeschlossen.

Weiterhin besteht bei dem bekannten Typ eines Plattenwärmetauschers die Gefahr, daß sich auskondensierende Flüssigkeit in einzelnen der über- bzw. untereinander angeordneten Plattenwärmetauscherstapel aufstaut, so daß ein solcher gefluteter Plattenwärmetauscherstapel so lange nicht für den Wärmeaustausch zur Verfügung steht, bis das Kondensat wieder abgeflossen ist.

Ausgehend von diesem Stand der Technik liegt der Erfindung die **Aufgabe** zugrunde, einen Plattenwärmetauscher der eingangs genannten Art derart zu verbessern, daß die Gefahr von Verkrustungen und/oder Flutung des Plattenwärmetauschers weitestgehend ausgeschlossen wird. Weiterhin liegt der Erfindung die Aufgabe zugrunde, einen Verdampfer mit derartigen Plattenwärmetauschern bereitzustellen.

Die **Lösung** der Aufgabenstellung zur Bereitstellung eines Plattenwärmetauschers ist dadurch gekennzeichnet, daß die rohrförmigen Strömungskanäle parallel zu den Längsrändern der Einzelplatten ausgebildet sind, über die die Einzelplatten miteinander zu den Plattenpaaren verbunden sind, wobei in den Einzelplatten zu den Längsrändem der Plattenstapel geneigte, in die wellenförmigen Strömungskanäle ragende Leerprägungen ausgebildet sind.

Durch die versetzte Anordnung der rinnenförmigen Prägungsabschnitte ergibt sich auch bei einem Überdruck in einem der Strömungskanäle eine stabile Abstützung zwischen den Einzelplatten, so daß auch bei hohen Druckdifferenzen keine bleibenden Verformungen der Einzelplatten auftreten. Weiterhin hat die erfindungsgemäße Ausgestaltung den Vorteil, daß es durch die Ausbildung der rohrförmigen Strömungskanäle zwischen den zu einem Plattenpaar verbundenen Einzelplatten und parallel zu den miteinander verbundenen Rändern der Einzelptatten möglich ist, über die gesamte Länge eines jeden Plattenpaares einen durchgehenden rohrförmigen Strömungskanal auszubilden. Aufgrund dieser ununterbrochen durchgehenden rohrförmigen Strömungskanäle kann der Durchsatz des auf diese Strömungskanäle aufgegebenen Mediums deutlich erhöht werden, da ein zwischenzeitliches Aufstauen beim Übergang von einem Plattenstapel zum anderen Plattenstapel nicht mehr stattfindet.

Auch die Gefahr der Flutung einzelner Plattenstapel im Bereich der wellenförmigen Strömungskanäle wird bei dieser erfindungsgemäßen Ausgestaltungsform weitestgehend ausgeschlossen, da die zwischen den zu einem Plattenstapel zusammengefügten Plattenpaaren ausgebildeten wellenförmigen Strömungskanäle nur die Breite des Plattenstapels überdecken, weshalb sich ansammelndes Kondensat schnell zur Seite oder nach unten abfließen kann.

Das Ableiten von sich im Bereich der wellenförmigen Strömungskanäle möglicherweise bildenden Kondensats kann dadurch erleichtert werden, daß gemäß einer praktischen Ausführungsform der Erfindung in den Einzelplatten zu den Längsseiten der Plattenstapel geneigte, in die wellenförmigen Strömungskanäle ragende Leerprägungen ausgebildet sind. Diese Leerprägungen dienen dazu, sich im Bereich der wellenförmigen Strömungskanäle bildendes Kondensat zu den Rändern der Plattenstapel abzuleiten, so daß auch ein Vollaufen der wellenförmigen Strömungskanäle, d.h. ein Fluten von unten nach oben ausgeschlossen ist.

Die erfindungsgemäße **Lösung** zur Ausgestaltung eines Verdampfers, insbesondere für mit auskristallisierbaren Stoffen beladene Medien, wie zum Beispiel bei der Verwendung in der Zuckerindustrie, mit einem Verdampfergehäuse und mindestens einem in dem Verdampfergehäuse angeordneten erfindungsgemäßen Plattenwärmetauscher der vorgenannten Art ist dadurch gekennzeichnet, daß die Plattenwärmetauscher derart aufgebaut und in dem Verdampfergehäuse angeordnet sind, daß die zwischen den jeweils zu einem Plattenpaar verbundenen Einzelplatten ausgebildeten rohrförmigen Strömungskanäle als über die gesamte Baulänge des Plattenwärmetauschers durchgehende Strömungskanäle ausgebildet sind und diese Strömungskanäle senkrecht im Verdampfergehäuse angeordnet sind.

Durch die Ausbildung und Anordnung der rohrförmigen Strömungskanäle als den gesamten Plattenwärmetauscher in senkrechter Richtung durchlaufende einstückige Strömungskanäle ist es möglich, die Durchflußrate des auf die rohrförmigen Strömungskanäle aufgegebenen Mediums, insbesondere eines mit auskristallisierbaren Stoffen beladenen Mediums, deutlich gegenüber dem Stand der Technik zu steigern, da das aus dem Stand der Technik bekannte Aufstauen beim Übergang von einem Plattenstapel zum anderen Plattenstapel bei dieser erfindungsgemäßen Ausgestaltungsform entfällt. Neben einer kompakteren Bauweise ermöglicht die Ausgestaltung der einstückig durchgehenden rohrförmigen Strömungskanäle eine gleichmäßige Durchströmung der Strömungskanäle und somit eine verminderte Ablagerung von Feststoffen in den Strömungskanälen.

Selbst wenn sich Feststoffe in den rohrförmigen Strömungskanälen absetzen sollten, lassen sich die rohrförmigen Strömungskanäle bei dem erfindungsgemäß ausgestalteten Verdampfer leicht mechanisch reinigen, da die einzelnen rohrförmigen Strömungskanäle kontinuierlich einstückig durch die gesamte Bauhöhe des Plattenwärmetauschers verlaufen.

Gemäß einer weiteren Ausführungsform der Erfindung wird vorgeschlagen, daß in dem Verdampfergehäuse mehrere Plattenwärmetauscher nebeneinander angeordnet sind. Durch dieses parallele Nebeneinanderanordnen mehrerer Plattenwärmetauscher in dem Verdampfergehäuse läßt sich die spezifische Leistung pro m³ umbautem Raum deutlich steigern. Da die einzelnen Plattenwärmetauscherstapel nebeneinander angeordnet sind und nicht wie aus dem Stand der Technik bekannt übereinander bzw. untereinander kommt es nicht zu einem Aufstauen eines Mediums beim Übertritt von einem Plattenstapel zum anderen Plattenstapel.

Gemäß einer bevorzugten Ausführungsform der Erfindung sind die einzelnen nebeneinander im Verdampfergehäuse angeordneten Plattenwärmetauscherstapel mit Abstand zueinander nebeneinander angeordnet. Neben der Möglichkeit, die einzelnen Plattenwärmetauscherstapel sicher und druckfest im Verdampfergehäuse festzulegen hat die Ausbildung des Abstands zwischen den einzelnen Plattenwärmetauscherstapeln den Vorteil, daß möglicherweise in den wellenförmigen Strömungskanälen anfallendes Kondensat, beispielsweise über die in den Einzelplatten ausgebildeten Leerprägungen, zum Rand eines jeden Plattenstapels und somit zum Spalt zwischen einzelnen Plattenstapeln abgeleitet werden kann, so daß ein Fluten der Plattenwärmetauscher nahezu ausgeschlossen ist.

Weitere Merkmale und Vorteile der Erfindung ergeben sich aus der nachfolgenden Beschreibung der zugehörigen Zeichnung, in der ein Ausführungsbeispiel eines erfindungsgemäßen Plattenwärmetauschers und eines mit einem solchen Plattenwärmetauscher ausgestatteten Verdampfers schematisch dargestellt ist. In der Zeichnung zeigt:
- Fig. 1: eine perspektivische Ansicht zweier mit Abstand zueinander nebeneinander angeordneter erfindungsgemäßer Plattenwärmetauscherstapel;
- Fig. 2: eine Seitenansicht eines Verdampfers mit im Verdampfergehäuse angeordneten Plattenwärmetauscherstapeln gemäß dem Stand der Technik;
- Fig. 3a: eine Seitenansicht eines erfindungsgemäßen Verdampfers mit im Verdampfergehäuse angeordneten erfindungsgemäßen Plattenwärmetauscherstapeln und
- Fig. 3b: eine um 90° gedrehte Seitenansicht des Verdampfers gemäß Fig. 3a.

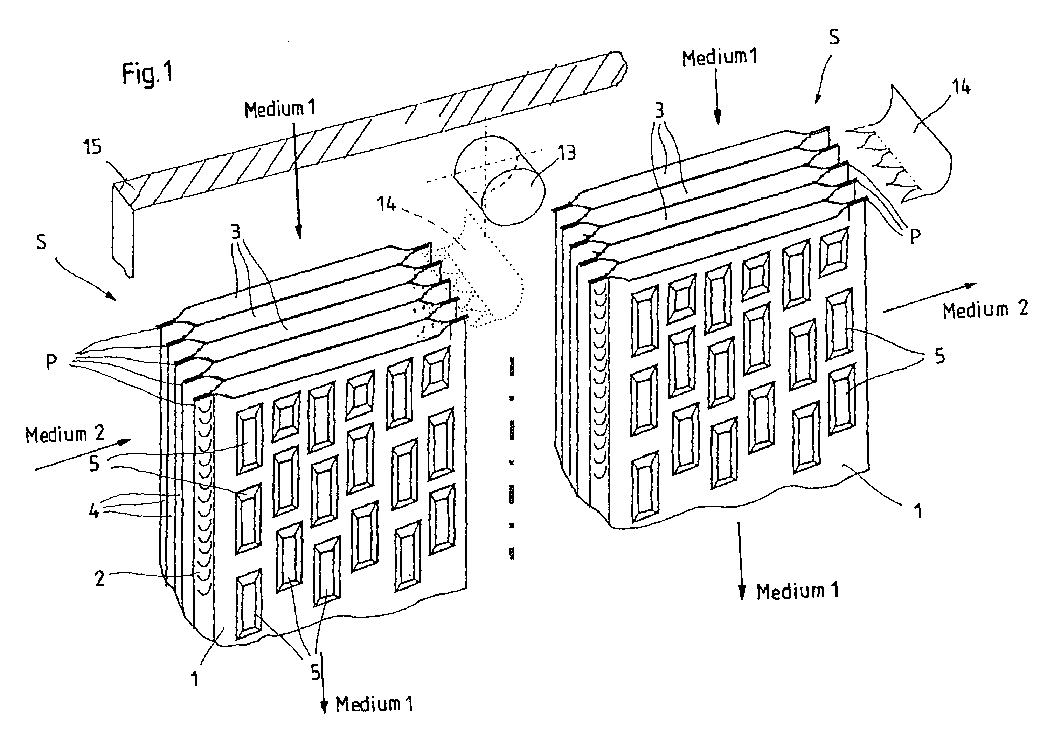

Der in Fig. 1 anhand zweier durch fünf Plattenpaare P gebildete Plattenstapel S dargestellte Plattenwärmetauscher besteht aus identischen Einzelplatten 1, die jeweils spiegelbildlich zueinander zu einem Plattenpaar P verbunden sind. Diese Verbindung erfolgt entlang der Längsränder 2 der Einzelplatten 1, wobei sich zwischen den jeweils ein Plattenpaar P bildenden Einzelplatten 1 ein rohrförmiger Strömungskanal 3 für das eine am Wärmeaustausch teilnehmende Medium 1 ergibt.

Durch Zusammenfügen der Plattenpaare P zu einem Plattenstapel S ergeben sich zwischen den aneinander anliegenden Einzelplatten 1 benachbarter Plattenpaare P wellenförmige Strömungskanäle 4 für das andere am Wärmeaustausch teilnehmende Medium 2, das im Kreuzstrom zum Medium 1 geführt wird.

Wie aus Fig. 1 ersichtlich ist, ist jede Einzelplatte 1 mit mehreren parallelen Reihen von in Strömungsrichtung des Mediums 1 verlaufenden, rinnenförmigen Prägungsabschnitten 5 versehen. Diese Prägungsabschnitte benachbarter Reihen sind in Längsrichtung zueinander versetzt angeordnet, wodurch sich zwischen aneinanderliegenden Einzelplatten 1 flächige Abstützungen zwischen den in einer Reihe aufeinanderfolgenden Prägungabschnitten 5 ergeben.

Aus der Praxis ist es bekannt, Verdampfer mit Plattenwärmetauschern auszustatten bzw. Röhrenfallstrom-Verdampfer nachträglich mit Plattenwärmetauschern zu versehen, da die Plattenwärmetauscher gegenüber den Röhrenfallstrom-Wärmetauschern eine deutliche Verbesserung der spezifischen Leistung des Verdampfers pro m³ umbautem Raum aufweisen.

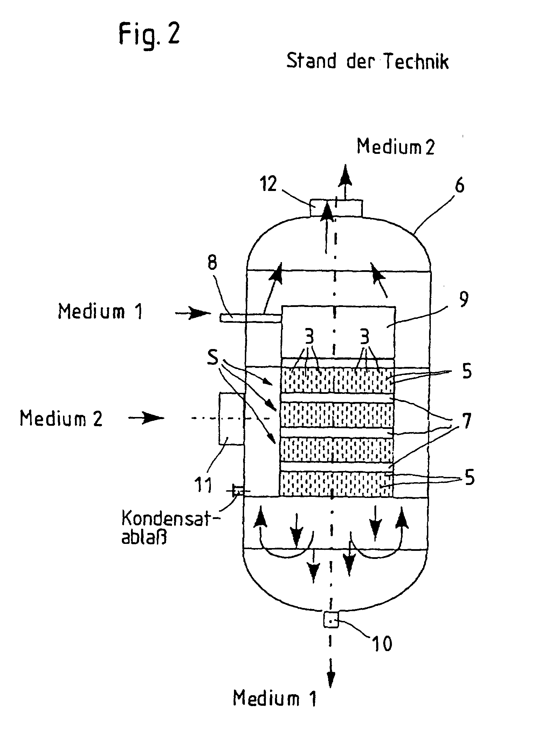

Fig. 2 zeigt einen mit Plattenwärmetauschern versehenen Verdampfer gemäß dem Stand der Technik. Bei dem dargestellten Ausführungsbeispiel eines Verdampfers nach dem Stand der Technik sind in einem Verdampfergehäuse 6 vier Plattenstapel S übereinander in dem Verdampfergehäuse 6 angeordnet. Im Gegensatz zu dem Plattenwärmetauscher gemäß Fig. 1 sind bei dem Verdampfer gemäß dem Stand der Technik die zwischen den Prägeabschnitten 5 ausgebildeten rohrförmigen Strömungskanäle 3 nicht in Längsrichtung der einzelnen Plattenpaare P ausgerichtet, sondern quer zu den Längsrändern 2 der Einzelplatten 1 ausgebildet. Um nun sicherzustellen, daß die rohrförmigen Strömungskanäle 3 innerhalb des Verdampfergehäuses 6 senkrecht von oben nach unten durch das Medium 1 durchströmt werden können, müssen die aus den Plattenpaaren P gebildeten einzelnen Plattenstapel S übereinander bzw. untereinander angeordnet werden, wie dies Fig. 2 darstellt. Zwischen den einzelnen Plattenpaaren P ergibt sich dabei jeweils ein Übergangsbereich 7, in dem sich das aus den rohrförmigen Strömungskanälen 3 des jeweils höher gelegenen Plattenstapels S austretende Medium 1 aufstauen kann, bevor es durch die rohrförmigen Strömungskanäle 3 der darunter angeordneten Plattenstapel S abgeleitet werden kann. Dieses Aufstauen des Mediums 1 bedeutet einerseits einen hohen Druckverlust innerhalb des Systems und andererseits eine Reduzierung des möglichen Durchsatzes des Mediums 1.

Insbesondere bei der Verwendung von mit auskristallisierbaren Stoffen beladenen Medien als Medium 1 besteht die Möglichkeit, daß sich durch das Aufstauen Ablagerungen entlang der rohrförmigen Strömungskanäle 3 bilden. Die durch die Übergangsbereiche 7 unterbrochene Ausbildung der rohrförmigen Strömungskanäle 3 weist dann den weiteren Nachteil auf, daß die rohrförmigen Strömungskanäle 3 aufgrund der Übergangsbereiche 7 nicht durchgehend von oben bis unten mechanisch zu reinigen sind.

Auch im Bereich der wellenförmigen Strömungskanäle 4 weist diese aus dem Stand der Technik bekannte Art des Aufbaus und der Anordnung der Plattenwärmetauscher im Verdampfergehäuse 6 einen Nachteil auf, da die wellenförmigen Strömungskanäle 4 der einzelnen Plattenstapel S nicht untereinander verbunden sind und darüber hinaus der Strömungsweg über die gesamte Breite des Verdampfers sehr lang ist. Beim Durchströmen der wellenförmigen Strömungskanäle 4 kann es auf Seiten des Mediums 2 zur Auskondensation von Flüssigkeit, insbesondere Wasser, kommen, so daß die Gefahr besteht, daß wellenförmige Strömungskanäle 4 einzelner Plattenstapel S voller Kondensat laufen und nicht mehr oder kaum noch für den Wärmeaustausch zur Verfügung stehen. Dies ist erst dann wieder möglich, wenn das sich gebildete Kondensat nach einiger Zeit aus den langen wellenförmigen Strömungskanälen 4 wieder abgeflossen ist.

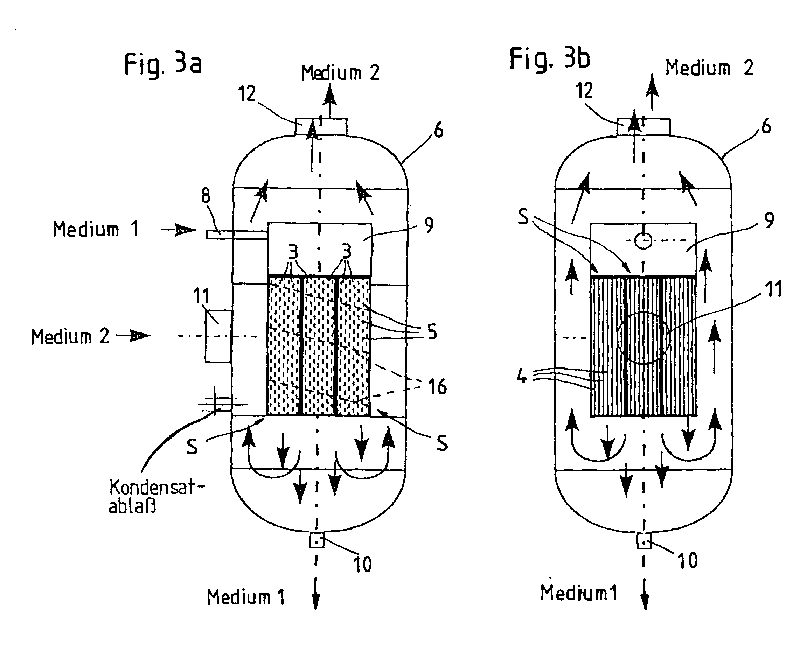

Fig. 3a und 3b zeigt im Gegensatz zu der aus dem Stand der Technik bekannten Anordnung von Plattenwärmetauschern in einem Verdampfer die Anordnung der in Fig. 1 dargestellten und eingangs beschriebenen neuartigen Plattenwärmetauscher in einem Verdampfer.

Wie aus Fig. 3a und 3b ersichtlich ist, sind bei dem dargestellten Ausführungsbeispiel drei aus jeweils mehreren Plattenpaaren P bestehende Plattenstapel S parallel senkrecht nebeneinander in dem Verdampfergehäuse 6 angeordnet. Wie weiterhin aus Fig. 3a ersichtlich ist, verlaufen die parallel zu den Längsrändern 2 der Einzelplatten 1 ausgebildeten rohrfömigen Strömungskanäle 3 senkrecht durchgehend von oben nach unten über die gesamte Bauhöhe des Plattenwärmetauschers, so daß auf die rohrförmigen Strömungskanäle 3 aufgegebenes Medium 1, beispielsweise eine Zuckerlösung in der Zuckerindustrie, ohne zwischenzeitliches Aufstauen in einem Übergangsbereich zwischen einzelnen Plattenstapeln S die rohrförmigen Strömungskanäle 3 durchströmen kann. Das über den Einlaß 8 für das Medium 1 in das Verdampfergehäuse 2 aufgegebene Medium 1 verteilt sich in einer Verteilerkammer 9 auf die nebeneinander angeordneten Plattenstapel S und durchströmt von dort aus senkrecht die rohrförmigen Strömungskanäle 3, bis das Medium 1 am unteren Ende des Verdampfergehäuses 6 über den Austritt 10 für das Medium 1 aus dem Verdampfergehäuse 6 austritt.

Das am Wärmeaustausch teilnehmende Medium 2, beispielsweise Dampf, tritt über einen Einlaß 11 für das Medium 2 in das Verdampfergehäuse 6 ein und durchströmt im Kreuzstrom zu den rohrförmigen Strömungskanälen 3 die wellenförmigen Strömungskanäle 4 in Querrichtung der nebeneinander angeordneten Plattenstapel S. Das Medium 2 verläßt das Verdampfergehäuse 6 über einen Austritt 12 am oberen Endes des Verdampfergehäuses 6.

Wie aus Fig. 1 ersichtlich ist, sind die einzelnen senkrecht nebeneinander angeordneten Plattenstapel S mit Abstand zueinander angeordnet. Dieser Abstand ist einerseits notwendig, um die einzelnen Plattenstapel S über Ankerelemente 13 und kammartige Halteelemente 14 an einer Gehäusewand 15 des Verdampfergehäuses 6 festlegen zu können und andererseits deshalb, um Kondensat abzuscheiden, welches sich möglicherweise beim durchströmen des Mediums 2 durch die wellenförmigen Strömungskanäle 4 gebildet hat. Durch den Kondensatabzug in dem Zwischenraum zwischen den einzelnen Plattenstapeln S wird die Gefahr vermieden, daß das innerhalb der wellenförmigen Strömungskanäle 4 anfallende Kondensat innerhalb der Plattenstapel S nach unten läuft und den Plattenwärmetauscher von unten nach oben flutet.

Wie in Fig. 3a schematisch dargestellt ist, können in den Einzelplatten 1 zu den Längsrändern 2 der Plattenstapel S geneigte, in die wellenförmige Strömungskanäle 4 ragende Leerprägungen 16 ausgebildet sein, die das in den wellenförmigen Strömungskanälen 4 anfallende Kondensat zu den Rändern der Plattenstapel S und somit dem Zwischenraum zwischen einzelnen Plattenstapeln S ableiten, so daß die Gefahr des Flutens des Plattenwärmetauschers weiter minimiert wird.

Neben dem Umstand, daß aufgrund der Ausbildung der durchgehenden senkrechten rohrförmigen Strömungskanäle 3 für das beispielsweise mit einem auskristallisierbaren Feststoff beladene Medium 1 der Durchsatz des Mediums 1 erhöht und somit die Gefahr von Ablagerungen vermieden werden können, zeichnet sich ein solchermaßen ausgebildeter Plattenwärmetauscher durch eine besonders kompakte Bauweise bei gleichzeitig erhöhter spezifischer Leistung pro m³ aus. Neben der beschriebenen Verwendung eines solchen Plattenwärmetauschers zum Einsatz in insbesondere in der Zuckerindustrie verwendeten Verdampfern, ist es selbstverständlich auch möglich, solche Plattenwärmetauscher beispielsweise in Niederdruckverdampfern zu verwenden.

Aufgrund der kompakten Bauweise dieses Plattenwärmetauscher besteht weiterhin die Möglichkeit, bestehende Röhrenfallstrom-Verdampfer so umzurüsten, daß die bestehenden Röhrenfallstrom-Wärmetauscher dem Verdampfergehäuse entnommen und die neuen, mit den senkrecht verlaufenden rohrfömigen Strömungskanälen 3 versehenen Plattenstapel S in das Verdampfergehäuse eingesetzt werden. Durch diesen Ersatz der Wärmetauscherelemente läßt sich die spezifische Leistung des solchermaßen umgerüsteten Verdampfers schlagartig deutlich erhöhen.

## Patentansprüche

1. Plattenwärmetauscher mit im Kreuzstrom durchströmbaren Strömungskanälen (3, 4), wobei die Strömungskanäle für das eine Medium wellenförmig (4) und für das andere Medium rohrförmig (3) ausgebildet sind, wobei die rohrförmigen Strömungskanäle (3) einerseits zwischen jeweils zu einem Plattenpaar (P) verbundenen, mit mehreren parallelen Reihen rinnenförmiger Prägeabschnitte (5) versehenen Einzelplatten (1) und andererseits zwischen den zu einem Plattenstapel (S) zusammengefügten Plattenpaaren (P) ausgebildet sind, wobei die Prägeabschnitte (5) benachbarter Reihen in Längsrichtung zueinander versetzt angeordnet sind,
**dadurch gekennzeichnet, daß**
die rohrförmigen Strömungskanäle (3) parallel zu den Längsrändern (2) der Einzelplatten (1) ausgebildet sind, über die die Einzelplatten (1) miteinander zu den Plattenpaaren (P) verbunden sind, wobei in den Einzelplatten (1) zu den Längsrändern (2) der Plattenstapel (2) geneigte, in die wellenförmigen Strömungskanäle (4) ragende Leerprägungen (16) ausgebildet sind.

2. Verdampfer mit einem Verdampfergehäuse (6) und mindestens einem in dem Verdampfergehäuse angeordneten Plattenwärmetauscher nach Anspruch 1, **dadurch gekennzeichnet, daß** die Plattenwärmetauscher derart aufgebaut und in dem Verdampfergehäuse (6) angeordnet sind, daß die zwischen den jeweils zu einem Plattenpaar (P) verbundenen Einzelplatten (1) ausgebildeten rohrföhrmigen Strömungskanäle (3) als über die gesamte Baulänge des Plattenwärmetauschers durchgehende Strömungskanäle ausgebildet sind und diese Strömungskanäle senkrecht im Verdampfergehäuse angeordnet sind.

3. Verdampfer nach Anspruch 2, **dadurch gekennzeichnet, daß** in dem Verdampfergehäuse (6) mehrere Plattenstapel (S) nebeneinander angeordnet sind.

4. Verdampfer nach Anspruch 3, **dadurch gekennzeichnet, daß** die einzelnen Plattenstapel (S) mit Abstand zueinander nebeneinander angeordnet sind.

## Claims

1. A plate-like heat exchanger having flow passages (3, 4), through which fluid may flow in crosscounter flow the flow passages being of wavy construction (4) for one medium and of tubular construction (3) for the other medium, the tubular flow passages (3) being defined on the one hand between individual plates (1) connected to a respective plate pair (P) and provided with a plurality of parallel rows of channel-shaped stamped sections (5) and on the other hand between the plate pairs (P) connected together to form a stack (S) of plates, the stamped sections (5) of adjacent rows being arranged offset from one another in the longitudinal direction, **characterised in that** the tubular flow passages (3) are constructed parallel to the longitudinal edges (2) of the individual plates (1), by which the individual plates (1) are connected together to form the plate pairs (P), whereby stamped voids (16), which are inclined to the longitudinal edges (2) of the plate stack (2) and project into the wavy flow passages (4), are formed in the individual plates (1).

2. A vaporiser having a vaporiser housing (6) and at least one plate-like heat exchanger as claimed in Claim 1 arranged in the vaporiser housing, **characterised in that** the plate-like heat exchanger is so constructed and arranged in the vaporiser housing (6) that the tubular flow passages (3) formed between the individual plates (1) connected to form a respective plate pair (P) are constructed in the form of continuous flow passages over the entire structural length of the plate-like heat exchanger and these flow passages are arranged vertically in the vaporiser housing.

3. A vaporiser as claimed in Claim 2, **characterised in that** a plurality of plate stacks (S) are arranged next to one another in the vaporiser housing (6).

4. A vaporiser as claimed in Claim 3, **characterised in that** the individual plate stacks (S) are arranged at a spacing next to one another.

## Revendications

1. Echangeur de chaleur à plaques comportant des passages d'écoulement (3, 4) pouvant être traversés selon le principe des courants inversés, les passages d'écoulement étant réalisés sous une forme ondulée (4) pour un fluide et sous une forme tubulaire (3) pour l_{'}autre fluide, dans lequel les passages tubulaires d'écoulement (3) sont réalisés, d'une part, entre des plaques individuelles (1), reliées chaque fois pour former une paire de plaques (P) et pourvues de plusieurs rangées parallèles de parties estampées (5) en forme de conduits et, d'autre part, entre les paires de plaques (P) assemblées pour constituer un empilage de plaques (S), dans lequel les parties estampées (5) de rangées voisines sont disposées de manière mutuellement décalée dans le sens longitudinal, **caractérisé en ce que**
les passages tubulaires d'écoulement (3) sont réalisés parallèlement aux bords longitudinaux (2) des plaques individuelles (1), par l'intermédiaire desquels les plaques individuelles (1) sont mutuellement reliées pour former les paires de plaques (P), et **en ce que** des estampages d'évacuation (16), faisant saillie vers l'intérieur des passages ondulés d'écoulement (4), sont réalisés dans les plaques individuelles (1) d'une manière inclinée par rapport aux bords longitudinaux (2) des empilages de plaques (2).

2. Evaporateur comportant un carter d'évaporateur (6) et au moins un échangeur de chaleur à plaques selon la revendication 1, disposé dans le carter d'évaporateur, **caractérisé en ce que** les échangeurs de chaleur à plaques sont conçus et disposés dans le carter d'évaporateur (6) de telle sorte que les passages tubulaires d'écoulement (3), réalisés entre les plaques individuelles (1) reliées chaque fois pour former une paire de plaques (P), sont réalisés en tant que passages d'écoulement traversant la totalité de la longueur hors tout de l'échangeur de chaleur à plaques, et **en ce que** ces passages d'écoulement sont disposés de manière verticale dans le carter d'évaporateur.

3. Evaporateur selon la revendication 2, **caractérisé en ce que** plusieurs empilements de plaques (S) sont disposés côte à côte dans le carter d'évaporateur (6).

4. Evaporateur selon la revendication 3, **caractérisé en ce que** les empilements individuels de plaques (S) sont disposés côte à côte avec un écartement entre eux.
